Europäisches Patentamt

European Patent Office

Office européen des brevets

(19)

(11) Publication number: **0 424 582 A1**

# EUROPEAN PATENT APPLICATION

(21) Application number: **89311014.8**

(22) Date of filing: **25.10.89**

(51) Int. Cl.⁵: **G08B 21/00, B60K 28/06**

(43) Date of publication of application:
**02.05.91 Bulletin 91/18**

(84) Designated Contracting States:
**AT BE CH DE ES FR GB GR IT LI LU NL SE**

(71) Applicant: **Chiu, Shui-Wen**
**3F1., No.30, Lane 60 Shuang Yuan Street**
**Shuang Yuan District**
**Taipei(TW)**

(72) Inventor: **Chiu, Shui-Wen**
**3F1., No.30, Lane 60 Shuang Yuan Street**
**Shuang Yuan District**
**Taipei(TW)**

(74) Representative: **Thomson, Roger Bruce et al**
**POLLAK MERCER & TENCH Eastcheap**
**House Central Approach**
**Letchworth Hertfordshire SG6 3DS(GB)**

(54) **Doze warning device.**

(57) A doze warning device, particularly for use by drivers of vehicles, has two modes of detecting the onset of dozing. The modes can be selected as alternatives or to be functional simultaneously. The device, similar to a pair of spectacles, incorporates an infrared detector system comprising an emitter (4), a receiver (5) and a detection circuit (6) set into a recess in one temple (3a) of the device. This detects movement of the eyelid. The other temple (3b) carries a motion detector to detect nodding of the head, namely a mercury switch (10). The positions of both the infrared emitter (4) and the mercury switch (10) can be adjusted relative to the temples. The incorporation of the motion detector circuit also means that the warning device can be used as an anti-theft device.

FIG. 1

# DOZE WARNING DEVICE

This invention relates to a doze warning device, particularly but not exclusively for use by the drivers of vehicles. The device also finds application as an anti-theft device by virtue of the warning system which it incorporates.

It is very important for any driver to concentrate fully on traffic conditions when driving. Accidents can easily occur if the driver becomes inattentive or is in a poor physical condition. Tiredness, causing the driver to fall into a doze, is one important cause of serious accidents. When a driver falls into a doze it indicates that he has lost his or her ability to concentrate on driving and his or her ability to respond to sudden occurrences has declined to the lowest level. There are various ways to stimulate drivers to try to prevent them from dozing, but most of these, such as drinking, listening to music and looking around, are useless and can even distract the driver to a dangerous extent.

It is an object of the present invention to provide a practical, convenient and reliable warning device for drivers, to use when driving, in order to prevent the driver dozing and thus to enhance safety.

It is an object of the present invention to provide a doze warning device which can be worn by a driver in just the same way as wearing a pair of spectacles.

It is a further object of the present invention to provide a doze warning device which, when switched on, will at any time during driving monitor the driver and emit a warning sound whenever it detects that the driver is falling into a doze, in order to serve as a warning to the driver that this is happening.

With these objects in mind the present invention is specifically directed to a doze warning device which has the function of detecting the closing of the driver's eyes. Whenever the driver is tending to fall into a doze, causing the eyelids to close, the device of the present invention will emit a warning by exercising a judgment function. The doze warning device of the present invention may also incorporate other means for detecting the doze condition of the driver, by detecting the nodding of the driver's head induced by dozing, and again emitting an appropriate warning.

In accordance with the present invention there is provided a doze warning device as claimed in claim 1. Various preferred features of the device are set out in the subsequent claims.

Preferably, the doze warning device of the present invention is provided with selector means whereby the user can choose a suitable mode of detection according to his or her need or inclination. This may be the mode of detection which is based upon detection of the movement of the eyelids. Alternatively, it may be the mode which detects a nodding movement of the head. Yet again, the user may choose to have both modes operational at the same time.

Although the doze warning device of the present invention is particularly appropriate for use by drivers of vehicles when driving, the device may also be used for example by students when attending classes or lectures, or when reading, or when writing, in order to maintain a good posture. The device of the present invention may also be used as an anti-theft warning device. The device may be placed for example in a purse, bag, suitcase or other container and will emit a warning sound if the container is moved, for example by some unauthorized person.

In order that the invention may be fully understood, one presently preferred embodiment of the doze warning device will now be described by way of example and with reference to the accompanying drawings. In the drawings;

Fig. 1 shows the doze warning device, viewed from the right hand side, and with some components shown in an exploded view;

Fig. 2 is a similar view of the device of Fig. 1, but viewed from the left hand side; and

Fig. 3 is a detail view showing the fitting of the infrared receiver at the bridge of the spectacles.

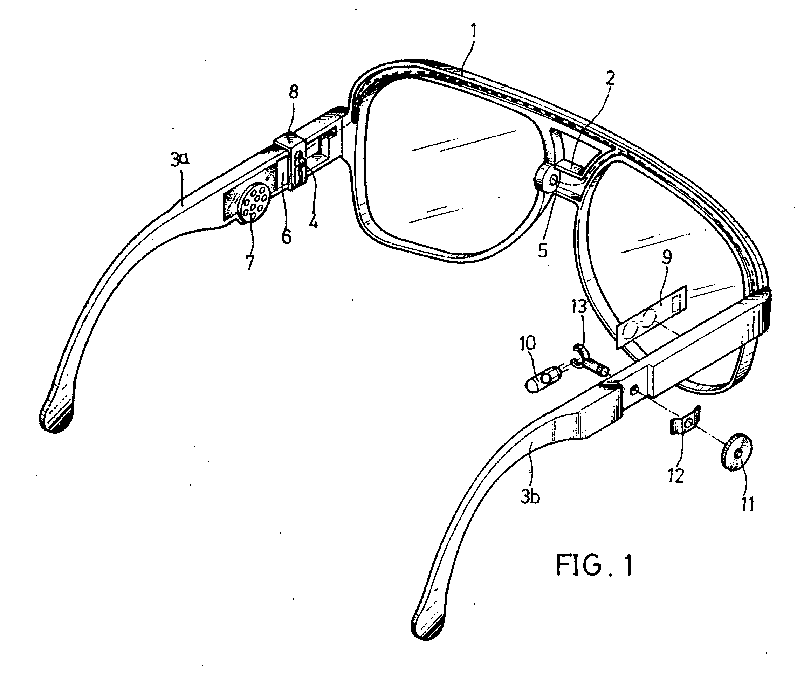

Referring first to Fig. 1, this shows that the doze warning device is constructed in a manner similar to a pair of spectacles, and has a frame 1. A bridge 2 is formed between and connects the left hand portion and the right hand portion of the frame 1. The device includes a left hand temple 3a and a right hand temple 3b. A recess is formed in the front portion of the left hand temple 3a, on the inside. In this recess is fitted an infrared detection circuit 6 which receives signals from an infrared receiver 5 which is fitted at the bridge 2. An infrared emitter 4 directs a beam of infrared radiation at the receiver 5. Depending upon the signals received by the detection circuit 6 from the receiver 5, the detection circuit will send a signal to an acoustic warning member 7 which will emit a warning sound. The emitter 4 which is incorporated into the detection circuit 6 is set in an adjustable reverse C-shaped adjusting member 8 in order to prevent infrared radiation from the emitter 4 directly reaching the user's eye. The adjusting member 8 can be moved backwards and forwards along the temple 3a with its upper and lower surfaces in sliding contact with the upper and lower faces of the temple 3a respectively.

The vertical limb of the adjusting member 8 is provided with a shaped slot therethrough. The slot is shaped to define a plurality of positions in which the emitter 4 may be set. The arrangement is such that the emitter 4 can be shifted upwards or downwards along the slot between the various alternative settings. By virtue of these alternative settings for the emitter 4 and by virtue of the movability of the adjusting member 8 along the temple 3a, the actual position of the emitter is capable of adjustment in relation to the receiver 5 so that the warning device can be adapted for use by people having different facial contours.

As mentioned above, the infrared beam from the emitter 4 to the receiver 5 is arranged so that movement of the user's eyelid will intersect the beam and be detected by the detection circuit 6. The detection circuit is such that it can distinguish between simple blinking of the eyelid and a more lengthy closure of the eyelid which would occur when the user is beginning to doze.

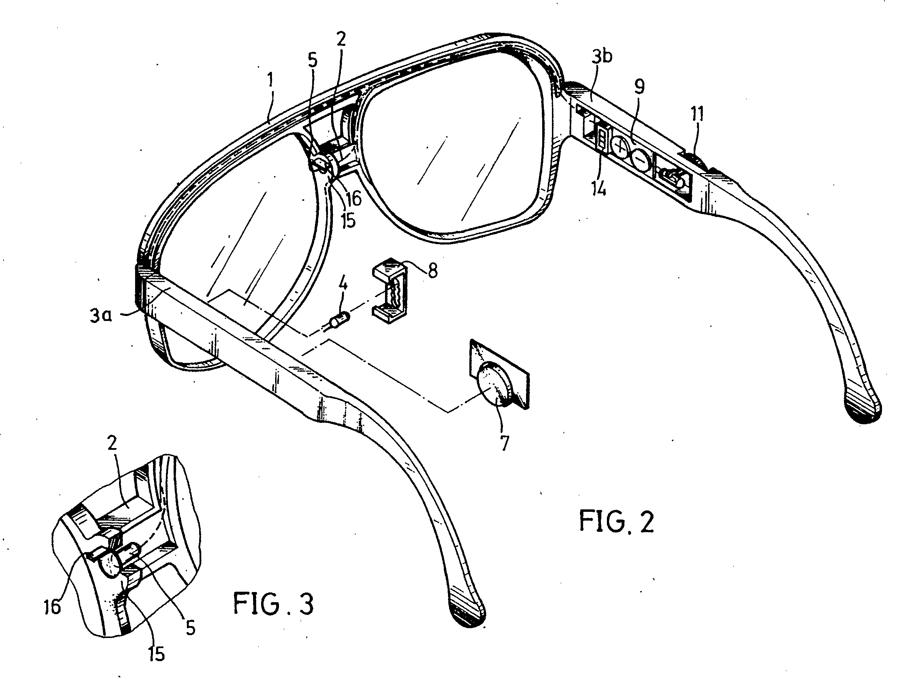

Fig. 3 shows in more detail the fitting of the infrared receiver 5 at the bridge 2. The receiver 5 is set into an arcuate projection 15 which is formed as a lug on the bridge. A tab 16 projects outwardly from the arcuate lug above the receiver 5 in order to prevent the receiver from being exposed directly to sunlight.

The doze warning device also includes a second doze detection system, based upon movement of the wearer's head. The right hand temple 3b has a recess, on the inside, at the front portion of the temple, in which is fitted a mercury switch circuit 9. A mercury switch 10 is fitted to the temple adjacent to the circuit 9. The mercury switch 10 is carried by an angle adjusting mechanism which comprises an adjusting knob 11, a plate spring 12 and a support arm 13 with a fork-like head which extends through a hole in the right hand temple 3b in such a manner that the fork-like head of the support arm extends into the recess to support the mercury switch 10. When the user rotates the adjusting knob 11, the angle of the mercury switch 10 will be varied accordingly. If, during use, the angle of the driver's head changes by dropping forward then the mercury switch will react and the mercury switch circuit 9 will transmit a signal by way of a lead wire to the acoustic emitter 7 which will emit a warning sound. A multi-position switch 14 is provided in the recess in the right hand temple 3b. In the preferred embodiment a 4-position switch is provided. In the first position the switch will stop all actions. In the second position the switch will select the infrared detection warning mode. In the third position the switch will select the mercury switch detection mode. In the fourth position the switch will select the double warning mode where both the infrared detector and the motion detector are functional simultaneously.

## Claims

1. A doze warning device comprising a frame (1) to be worn on the head and comprising a left hand temple (3a) and a right hand temple (3b) connected by a bridge portion (2); infrared receiver means (5) set on said bridge portion (2); said temples (3a,3b) carrying on the one hand an infrared emitter (4) and a detection circuit (6) responsive to signals from said receiver means (5) and on the other hand motion detector means (9, 10) arranged to detect a downward nodding movement of the user's head; an acoustic warning means (7) carried by the frame; and multi-position switch means (14) to enable the user to select between alternative detection modes of the device.

2. A doze warning device as claimed in claim 1, characterised in that said infrared emitter (4) is carried by adjustment means (8) which can be displaced lengthwise along the associated temple (3a), wherein said adjustment means (8) also defines alternative positions for the accommodation of the emitter (4), whereby the position of the emitter (4) in relation to the receiver (5) can be adjusted both along the length of the temple and upwards and downwards in relation to the temple.

3. A doze warning device as claimed in claim 2, characterised in that said adjustment means (8) comprises a generally C-shaped member having its outer limbs in sliding contact with the temple (3a) and having its central web provided with an indented slot which defines alternative setting positions for the infrared emitter (4).

4. A doze warning device as claimed in any preceding claim, characterised in that said motion detector means comprises a tilt switch (10), means (11, 12, 13) to adjust the angular setting of the switch (10), and circuit means (9) associated with the tilt switch (10) and arranged in response to motion of the switch to trigger the acoustic warning means (7).

5. A doze warning device as claimed in claim 4, characterised in that said means to adjust the tilt switch comprises an adjusting knob (11) on the outside of the temple (3b), and a support arm (13) extending through the temple and holding the tilt switch (10) on the inside of the temple.

6. A doze warning device as claimed in any preceding claim, in which said multi-position switch means (14) enables the user to select between an infrared detection mode, a motion switch detection mode and the use of both said modes simultaneously.

FIG . 1

EP 0 424 582 A1

FIG. 2

FIG. 3

EP 0 424 582 A1

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| A | US-A-4875030 (CHIU)<br>* the whole document * | 1, 2 | G08B21/00<br>B60K28/06 |
| A | FR-A-1604721 (MIMOUN E. A.)<br>* page 1, lines 12 - 25 *<br>* page 2, lines 7 - 19 *<br>* figures 1-6 * | 1-4 | |
| A | GB-A-2145262 (GUNSON'S COLORPLUGS)<br>* page 1, lines 16 - 46 *<br>* page 1, lines 88 - 91 *<br>* figures 1-4 * | 1 | |
| A | US-A-4272764 (HERR ET AL.)<br>* the whole document * | 1, 4, 5 | |
| | | | TECHNICAL FIELDS SEARCHED (Int. Cl.5 )<br><br>G08B<br>B60K |

The present search report has been drawn up for all claims

| Place of search | Date of completion of the search | Examiner |
|---|---|---|
| THE HAGUE | 22 JUNE 1990 | CLASEN M.P. |